# DEMANDE DE BREVET EUROPEEN

(11) **EP 2 693 113 A1**
(43) Date de publication de la demande: **05.02.2014**
(21) Numéro de dépôt: 13178921.6
(22) Date de dépôt: 01.08.2013
(51) Int. Cl.: F21V 5/00, G02B 3/04, F21S 8/10, F21V 5/04

(54) **Lentille épaisse bi-matière pour dispositif d'éclairage notamment de véhicule automobile**

(30) Priorité: 02.08.2012 FR 1202175
(71) Demandeur: VALEO VISION, 93012 Bobigny Cedex (FR)
(72) Inventeur: Hugol, Maxime, 95220 Herblay (FR); Meyrenaud, Jean-Luc, 93190 LIVRY GARGAN (FR)

(57) **Abrégé**

Lentille optique plan-convexe (202) notamment pour dispositif d'éclairage, comprenant un dioptre d'entrée plan (204), un dioptre de sortie convexe (206) et un axe optique (208) ; dans laquelle le volume de matière transparent de la lentille comprend :
- une lame (210) comprenant le dioptre d'entrée (204) et formée d'un matériau d'un indice de réfraction (n₃), et
- une pièce complémentaire (212) accolée à ladite lame et comprenant le dioptre de sortie (206), la pièce complémentaire comprenant un matériau d'indice (n₁) différent de différent de l'indice de réfraction (n₃) du matériau de la lame, de sorte que la lentille comprend un dioptre intermédiaire (114) entre la lame (210) et la pièce complémentaire (212), le dioptre de sortie (206) étant configuré de manière à ce que le foyer optique (f) de la lentille soit situé sur la surface du dioptre d'éntrée (204) à la intersection de l'axe optique (208)avec la surface du dioptre d'entrée (204).

## Description

### Domaine technique :

L'invention a trait au domaine des lentilles de dispositif d'éclairage notamment pour véhicule automobile. Plus particulièrement, l'invention a trait au design et la fabrication d'une lentille plan-convexe. L'invention a trait également à un module d'éclairage comprenant une telle lentille.

### Technique antérieure :

Les lentilles utilisées dans les dispositifs d'éclairage, tels que les projecteurs de véhicule automobile sont habituellement du type plan-convexe de manière à pouvoir dévier les rayons émis par une source lumineuse et passant par le foyer optique de la lentille en un faisceau de rayons généralement parallèles. Des lentilles dites épaisses sont intéressantes pour former des modules compacts, c'est-à-dire avec une distance focale très courte au point notamment que le foyer se situe sur la face d'entrée plane de la lentille. Une lentille épaisse est une lentille dont l'épaisseur n'est pas négligeable devant les rayons de courbure de ses faces.

La réalisation de lentilles épaisses n'est pas sans poser problème. En effet, les lentilles sont habituellement réalisées par moulage à injection de matière plastique. Or, les phénomènes de retrait de matière inhérents à ce procédé génèrent des variations géométriques importantes lorsque l'épaisseur de matière injectée est élevée. Les épaisseurs importantes posent également des problèmes d'ajustement du temps de maintien du moule après injection.

Le document de brevet JP 2008 226542 A divulgue une lentille de projecteur pour véhicule automobile, la lentille étant du type bi matière en vue de réduire les aberrations chromatiques. Elle est en effet constituée d'une première portion d'un premier indice de réfraction et d'une deuxième portion d'un deuxième indice de réfraction inférieur audit premier indice. La lentille est réalisée par injection de deux matières différentes en deux étapes. Un premier moule est en effet utilisé pour injecter la première portion, la partie du moule correspondant à la face non finie de la lentille est ensuite remplacée par une partie de remplacement formant le volume de la deuxième portion. La matière de la deuxième portion peut alors être injectée et moulée. Le dioptre formé à l'intérieur de la lentille va dévier par réfraction les rayons le traversant et, partant, modifier de manière importante les caractéristiques optiques de la lentille. Cette lentille présente en fait une face d'entrée convexe destinée à compenser l'effet de son dioptre interne. Cet enseignement ne propose cependant pas de solution au problème des tolérances de fabrication de lentilles, notamment de lentilles dites épaisses.

Le document DE 10 2010 004 825 A1 décrit une lentille plan-convexe selon le préambule de la revendication 1, comprenant une lame, avec un premier indice de réfraction, portant le dioptre d'entrée, laquelle lame est accolée à une pièce complémentaire, avec un second indice de réfraction, portant le dioptre d'entrée. le foyer optique de cette lentille est situé en dehors de la lentille et à une distance certaine du dioptre d'entrée, une source lumineuse étant intercalée entre le foyer et le dioptre.

### Résumé de l'invention :

L'invention a pour objectif de proposer une solution au problème de tolérance de fabrication de lentilles, plus particulièrement de lentilles épaisses.

L'invention a pour objet une lentille optique plan-convexe notamment pour dispositif d'éclairage, comprenant un volume de matière transparente avec une face d'entrée formant un dioptre d'entrée plan, une face de sortie formant un dioptre de sortie convexe et un axe optique traversant le dioptre d'entrée et le dioptre de sortie; le volume de matière comprenant :
- une lame comprenant le dioptre d'entrée, ladite lame étant formée d'un matériau d'un indice de réfraction, et
- une pièce complémentaire accolée à ladite lame et comprenant le dioptre de sortie, la pièce complémentaire comprenant un matériau d'indice de réfraction différent de l'indice de réfraction du matériau de la lame, de sorte que la lentille comprend un dioptre intermédiaire entre la lame et la pièce complémentaire;
le dioptre de sortie étant configuré de manière à ce que le foyer optique de la lentille soit situé sensiblement sur le dioptre d'entrée.

Par sensiblement sur, on entend ici que le foyer optique est sur la surface du dioptre, à l'intersection de l'axe optique avec la surface du dioptre, plus ou moins une marge de précision de l'usinage qui est inférieure ou égale à 50 micromètres, de préférence à 10 micromètres et plus préférentiellement à 5 micromètres.

Cette configuration de lentille épaisse dans laquelle le dioptre de sortie est configuré de manière à ce que le foyer optique soit placé sensiblement sur le dioptre d'entrée est particulièrement avantageuse en vue d'une utilisation de la lentille dans un dispositif d'éclairage de véhicule automobile pour générer un faisceau d'éclairage à coupure, par exemple un faisceau de croisement ou antibrouillard : la lentille sera alors associée à un cache qui est de manière optimale directement au contact du dioptre d'entrée et du foyer ; ainsi, le rendement lumineux de l'ensemble est excellent. Avantageusement, le cache est alors surmoulé sur le dioptre d'entrée.

D'une manière générale dans la présente invention, le terme de lame n'est pas limité à une épaisseur donnée de la lame en comparaison avec ses autres dimensions. La lame permet d'ajouter de l'épaisseur à la lentille, et donc d'avoir une pièce complémentaire plus fine. Il est ainsi possible de réaliser une pièce complémentaire avec un dioptre de sortie plus précis, les phénomènes de retrait dans le moule lors du refroidissement étant moins important avec une pièce fine. Une fois la pièce complémentaire réalisée, on lui accole, notamment par assemblage mécanique ou surmoulage, la lame pour obtenir l'épaisseur. Au final on obtient une lentille plus épaisse, tout en gardant une certaine précision sur le dioptre de sortie. La face d'entrée de la lame correspondant au dioptre d'entrée de la lentille peut être parallèle à la face de la lame en contact avec la pièce complémentaire et formant le dioptre intermédiaire. Ainsi cela permet lors de la conception de la lentille d'effectuer l'ajustement essentiellement sur la configuration du dioptre de sortie de la pièce complémentaire.

Selon une réalisation de l'invention la lame peut-être un parallélépipède. Cette réalisation permet une conception et une fabrication plus facile de la lentille.

La lame peut être venue de matière en une seule pièce. Cette réalisation permet également une conception et une fabrication plus facile de la lentille.

Selon un mode avantageux de l'invention, le dioptre de sortie est de profil généralement elliptique avec un premier et un deuxième foyer géométrique, le premier desdits foyers étant situé à distance du dioptre d'entrée, le deuxième desdits foyers étant situé dans la lentille.

Selon un mode avantageux de l'invention, le premier des foyers géométriques du profil elliptique du dioptre de sortie est situé :
- soit à l'extérieur de la lentille, le dioptre d'entrée étant entre les premier et deuxième foyers géométriques, lorsque l'indice de réfraction de la lame est inférieur à celui de la pièce complémentaire du volume de matière transparente,
- soit dans la lentille lorsque l'indice de réfraction de la lame est supérieur à celui de la pièce complémentaire dudit volume.

Selon un mode avantageux de l'invention, les premier et deuxième foyers géométriques du profil elliptique du dioptre de sortie passent par l'axe optique.

Selon un mode avantageux de l'invention, le premier foyer géométrique du profil elliptique est situé à une distance D=E(1-n₃/n₁) du dioptre d'entrée, E étant l'épaisseur de la lame, n₃ l'indice de réfraction de la lame et n₁ l'indice de réfraction de la pièce complémentaire de la lentille.

Selon un mode avantageux de l'invention, le dioptre intermédiaire est plan.

Selon un mode avantageux de l'invention, la lentille présente une épaisseur moyenne ou maximale supérieure à 10 mm, préférentiellement 15 mm, plus préférentiellement 20 mm.

Selon un mode avantageux de l'invention, l'épaisseur D de la lame est supérieure à 5 mm, préférentiellement 10 mm.

Selon un mode avantageux de l'invention, la lame est maintenue en contact plan avec la pièce complémentaire du volume de matière transparente par des moyens de mise en pression, préférentiellement en l'absence de matière supplémentaire au niveau du contact.

Selon un mode avantageux de l'invention, la lentille est configurée pour que des rayons passant par le foyer optique et la traversant soient réfractés et sortent du dioptre de sortie, essentiellement parallèles à l'axe optique, de manière à former un faisceau d'éclairage.

L'invention a également pour objet un module d'éclairage notamment pour véhicule automobile, comprenant: une source lumineuse, notamment du type à électroluminescence; une lentille disposée devant la source lumineuse de manière à former un faisceau d'éclairage; remarquable en ce que la lentille est conforme à l'invention.

L'invention a également pour objet un ensemble de lentilles optiques notamment pour dispositif d'éclairage de véhicule automobile; remarquable en ce que les lentilles sont conformes à l'invention; la lame étant commune à toutes les lentilles alors que la pièce complémentaire de chaque lentille est distincte des pièces complémentaires des autres lentilles.

Ainsi, l'ensemble de lentilles comprend un dioptre d'entrée correspondant à la face d'entrée de la lame, plusieurs dioptres de sortie correspondant respectivement aux dioptres de sortie des lentilles, et plusieurs dioptres intermédiaires correspondant aux faces respectives de chacune des pièces complémentaires en contact avec la face de sortie de ladite lame. Ce mode de réalisation permet de réaliser un ensemble de lentilles, dans lequel la lame sert de support commun aux différentes pièces élémentaires comportant les dioptres de sortie. Cela permet de réaliser de façon plus précise un système de lentilles dont les faisceaux lumineux doivent être disposés précisément les uns par rapport aux autres.

Par exemple, cet ensemble peut être utilisé dans un projecteur notamment pour réaliser un faisceau d'éclairage de la route et/ou pour réaliser plusieurs faisceaux d'éclairage de la route.

Les lentilles peuvent être chacune destinées à être associées à une ou plusieurs sources lumineuses et éventuellement à un ou plusieurs réflecteurs pour former plusieurs parties d'un faisceau d'éclairage de la route.

Par exemple, selon une réalisation de l'ensemble de lentilles, une lentille est destinée à être associée à une source de lumière et éventuellement un réflecteur pour réaliser un faisceau de croisement, et une autre lentille est destinée à être associée à une source de lumière et éventuellement un réflecteur pour réaliser un faisceau complémentaire pour former un faisceau route.

Selon un autre exemple de réalisation de l'ensemble de lentilles, une lentille est destinée à être associée à une source de lumière et éventuellement un réflecteur pour réaliser une partie d'un faisceau de croisement, tel qu'un faisceau large avec une ligne de coupure horizontale supérieure, et une autre lentille est destinée à être associée à une source de lumière et éventuellement un réflecteur pour réaliser une autre partie du faisceau de croisement, par exemple un faisceau plus concentré que le faisceau large précité et présentant une coupure oblique supérieure.

Les caractéristiques de l'invention permettent de réaliser une lentille en au moins deux parties dont une est une lame, notamment à faces parallèles. Les caractéristiques de l'invention permettent de corriger les déviations des rayons provoquées par le dioptre formé par la zone de contact entre la lame et l'autre partie de la lentille. La correction est simple à réaliser. La lentille qui en résulte est donc économique à réaliser notamment du fait que l'épaisseur de ses différentes parties est limitée et permet ainsi de garder une précision importante.

### Descriptif des figures :

D'autres caractéristiques et avantages de la présente invention seront mieux compris à l'aide de la description et des dessins parmi lesquels :
- La figure 1 est une vue de profil d'une lentille épaisse selon l'état de la technique ;
- La figure 2 est une vue de profil d'une lentille épaisse bi-matière, avec une lame formant la face d'entrée ;
- La figure 3 est une vue de profil de la lentille épaisse de la figure 2, illustrant en trait pointillé la correction apportée à la face de sortie en vue de compenser l'effet optique de la présence de la lame ;
- La figure 4 est une vue de profil de la lentille des figures 2 et 3 corrigée, conformément à l'invention ;
- La figure 5 est une de face d'un dispositif d'éclairage avec plusieurs lentilles conformes à l'invention ;
- Les figures 6a, 6b, 6c, 6d, 6e et 6f illustrent des faisceaux obtenus avec, selon le cas, une ou plusieurs lentilles du dispositif de la figure 5.

### Description détaillée de l'invention :

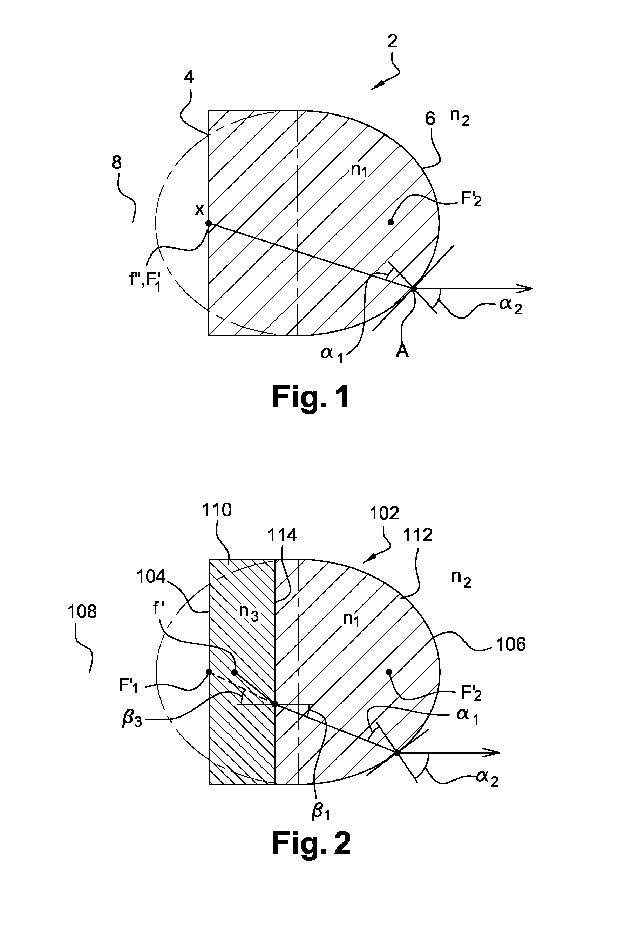

La figure 1 illustre une lentille dite épaisse conforme à l'état de la technique. La lentille 2 comprend essentiellement un volume de matière transparente d'un indice de réflexion n₁ supérieure à 1. L'indice de réfraction n₂ de l'air ambiant est en effet égal à 1. La matière transparente peut être une matière plastique ou encore du verre. La lentille 2 comprend une face d'entrée 4 formant un dioptre d'entrée plan, et une face de sortie courbe 6 formant un dioptre de sortie convexe.

Le profil du dioptre de sortie correspond essentiellement à une ellipse caractérisée par deux foyers géométriques F₁' et F₂'. Dans le cas précis de l'exemple de la figure 1, le premier foyer géométrique F₁' correspond au foyer optique f" de la lentille 2 et est situé sur le dioptre d'entrée 4, sur l'axe optique 8 de la lentille 2. Les rayons passant par le foyer f" et traversant la lentille sont réfractés par le dioptre de sortie 6 de manière à former un faisceau d'éclairage essentiellement parallèle à l'axe optique 8, comme cela est illustré à la figure. Selon la loi de Snell-Descartes, les angles d'incidence du faisceau à l'entrée et à la sortie du dioptre de sortie 6 obéissent à l'équation n_{1.}sinα₁= n₂.sinα₂.

La figure 2 illustre une lentille épaisse bi-matière de géométrie similaire à celle de la figure 1. Le volume de matière transparente de la lentille 102 comprend maintenant une lame 110 dans une matière transparente d'un indice de réfraction n₃ différent de celui de la pièce complémentaire 112 correspondant au reste de la lentille, en l'occurrence l'indice n₁. Plus précisément, dans le cas précis de cet exemple, l'indice de réfraction n₃ est inférieur à l'indice de réfraction n₁. La face d'entrée 104 forme un dioptre d'entrée similaire à celui de la lentille de la figure 1. Il en va de même pour la face de sortie 106.

La zone de contact entre la lame 110 et le reste 112 de la lentille 102 forme un dioptre intermédiaire plan 114. Il est intéressant d'observer le comportement d'un rayon au travers de la lame, plus particulièrement au travers du dioptre intermédiaire. On peut en effet observer que le foyer optique f' de la lentille s'est déplacé vers l'avant à l'intérieur de la lame 110. En effet, en raison de la différence d'indice de réfraction et plus précisément en raison du fait que l'indice de réfraction n₃ de la lame est inférieur à l'indice de réfraction n₁ de la pièce complémentaire 112 de la lentille 102, le rayon les traversant sort du dioptre intermédiaire avec un angle d'incidence β₁ inférieur à l'angle d'incidence β₃ initial, selon la loi de Snell-Descartes. Les rayons doivent donc partir d'un point f' plus avancé pour compenser cette déviation. Il est à noter que les premier et deuxième foyers géométriques F₁' et F₂' du profil elliptique 106 sont restés inchangés par rapport à la lentille de la figure 1.

Il résulte que la lentille 102 illustrée à la figure 2 n'est pas apte à assurer une fonction optique similaire ou identique à celle de la lentille de la figure 1.

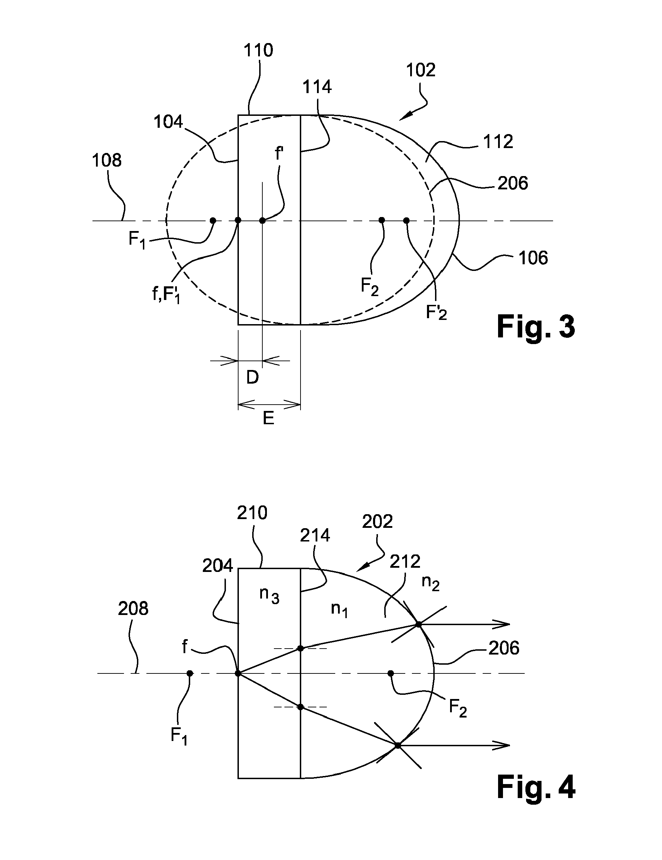

La figure 3 correspond essentiellement à la lentille de la figure 2, illustrant toutefois en pointillé la correction apportée à la face de sortie afin de rétablir le foyer optique f sur la face d'entrée 104. En effet, le profil en pointillé 206 conforme à l'invention correspond au profil elliptique original 106 modifié, le profil 206 étant en effet décalé vers l'arrière (en l'occurrence vers la gauche à la figure 3) d'une distance D afin de ramener le foyer optique f' sur la face d'entrée 104, ou au moins sensiblement sur cette dernière. Les foyers géométriques F₁' et F₂' du profil elliptique 106 sont alors décalés également vers l'arrière, de manière à former les foyers géométriques F₁ et F₂ du profil elliptique 206 corrigé. Les rayons passant par l'intersection de l'axe optique 108 avec la face d'entrée 104 peuvent alors être transmis et réfractés au travers de la lentille de manière à former un faisceau correspondant à celui de la lentille de la figure 1.

Le décalage peut être D=E(1-n₃/n₁), E étant l'épaisseur de la lame.

Si l'indice de réfraction n₃ de la lame est supérieur à l'indice de réfraction n₁ du reste de la lentille, le décalage du profil de la face de sortie se fait alors non plus vers l'arrière mais bien vers l'avant, de manière à ramener le foyer optique de la lentille à sa face d'entrée. La formule susmentionnée peut également s'appliquer.

La figure 4 illustre la lentille corrigée de la figure 3. On peut y observer les trajectoires des rayons, notamment leur déviation au passage du dioptre intermédiaire.

La lentille 202 résultante présente des performances voisines de celles de la lentille de la figure 1, sa construction étant rendue toutefois sensiblement plus simple. Son épaisseur a en effet été réduite de par sa construction en deux éléments 210 et 212. Chacun de ces éléments peut alors être fabriqué de manière conventionnelle sans soin particulier et sans augmentation du taux de rebut.

La lame 210 est préférentiellement maintenue en place contre la pièce complémentaire 212 par des moyens mécaniques, de manière à éviter l'usage de colle ou de toute autre matière au niveau du contact de manière à éviter de former un ou plusieurs dioptres supplémentaires et parasites.

Ainsi la lentille optique plan-convexe 202 notamment pour dispositif d'éclairage, comprend un volume de matière transparente avec une face d'entrée 204 formant un dioptre d'entrée plan, une face de sortie 206 formant un dioptre de sortie convexe et un axe optique 208 traversant le dioptre d'entrée 204 et le dioptre de sortie 206. Le volume de matière comprend :
- une lame 210 comprenant le dioptre d'entrée 204, ladite lame étant formée d'un matériau d'un indice de réfraction n3, et
- une pièce complémentaire 212 accolée à ladite lame et comprenant le dioptre de sortie 206, la pièce complémentaire comprenant un matériau d'indice n1 différent de différent de l'indice de réfraction n3 du matériau de la lame, de sorte que la lentille comprend un dioptre intermédiaire 214 entre la lame 210 et la pièce complémentaire 212;
le dioptre de sortie 206 étant configuré de manière à ce que le foyer optique f de la lentille soit situé sensiblement sur le dioptre d'entrée 204.

Selon le mode de réalisation illustré en figure 4, le dioptre de sortie 206 est de profil généralement elliptique, comme exposé ci-dessus, avec un premier et un deuxième foyer géométrique F₁, F₂, le premier F₁ desdits foyers étant situé à distance du dioptre d'entrée 204, le deuxième F₂ desdits foyers géométriques étant situé dans la lentille.

Le profil elliptique de la face de sortie est un exemple de profil parmi d'autres. En effet, le profil de la face de sortie peut également être un ovale de Descartes. Il s'agit d'un lieu de points M dont les distances MF₁ et MF₂ à deux points fixes comparables aux foyers géométriques de l'ellipse des figures 1 à 4, sont liés par une relation du type µMF₁+vMF₂=e, avec |µ|≠|v|.

Le profil convexe qui sera sélectionné pour la face de sortie pourra dépendre notamment du type de faisceau d'éclairage à produire, notamment de la caractéristique de son empreinte. Des profils complexes notamment calculés par moyens numériques peuvent également être utilisés.

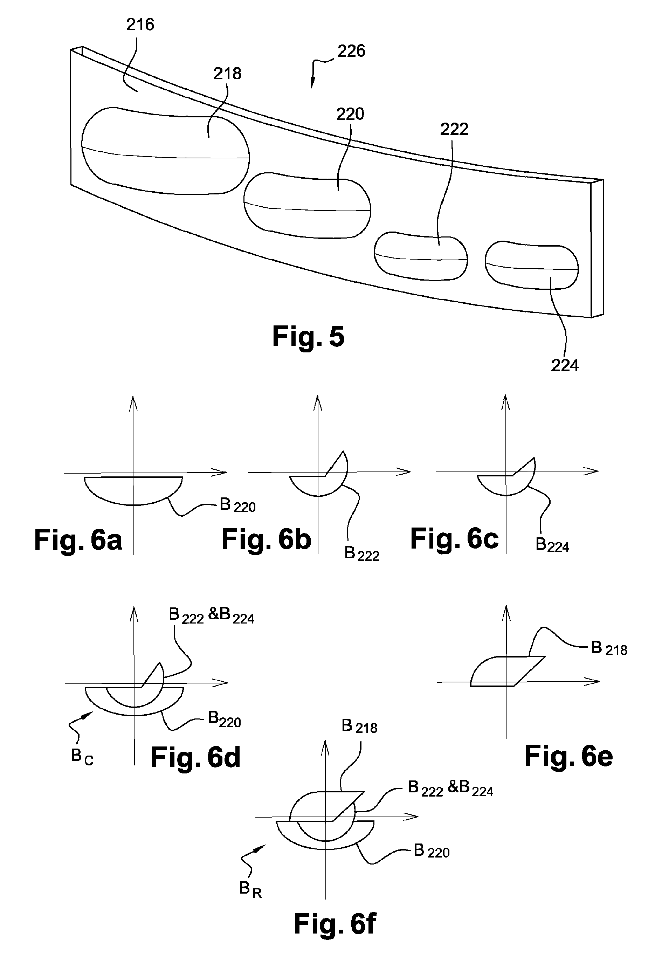

La figure 5 illustre un ensemble de lentilles 226 comportant plusieurs modules conformes à l'invention. L'ensemble 226 est constitué essentiellement d'une lame commune 216 sur laquelle sont disposés des éléments à surfaces convexes 218, 220, 222, 224. Le module 218 peut être du type route, avec par exemple un profil elliptique pur. Le module 220 peut être du type code. Les modules 222 et 224 peuvent être du type code ou encore des indicateurs de direction.

Ainsi, l'ensemble de lentilles 226 comprend un dioptre d'entrée correspondant à la face d'entrée de la lame commune 216, plusieurs dioptres de sortie correspondant respectivement aux dioptres de sortie des pièces complémentaires 218, 220, 222, 224 des lentilles, et plusieurs dioptres intermédiaires correspondant aux faces respectives de chacune des pièces complémentaires en contact avec la face de sortie de la lame 216.

Ce mode de réalisation permet de réaliser un ensemble de lentilles 226, dans lequel la lame 216 sert de support commun aux différentes pièces complémentaires 218, 220, 222, 224 comportant les dioptres de sortie. Cela permet de réaliser de façon plus précise un système de lentilles dont les faisceaux lumineux doivent être disposés précisément les uns par rapport aux autres.

On peut également envisager un mode de réalisation où les dioptres de sortie du mode de réalisation illustré en figure 5 soient configurés pour obtenir les faisceaux illustrés en figures 6a à 6f, à savoir que :
- le module 220 réalise un faisceau large B₂₂₀ avec une coupure horizontale supérieure ;
- les modules 222 et 224 réalisent chacun un faisceau concentré, respectivement B₂₂₂ et B₂₂₄, avec une coupure oblique, de manière à former un faisceau de croisement B_{C} par superposition avec le faisceau B₂₂₀ émis par le module 220; et
- le module 218 réalise un faisceau complémentaire B₂₁₈ de manière à former un faisceau route B_{R} par superposition avec les faisceaux B₂₂₀, B₂₂₂ et B₂₂₄ des modules 220, 222 et 224.

### Application industrielle :

La lentille selon l'invention trouve une application particulièrement préférée dans des dispositifs d'éclairage pour véhicules automobiles.

## Revendications

1. Lentille optique plan-convexe (202) notamment pour dispositif d'éclairage, comprenant un volume de matière transparente avec une face d'entrée (204) formant un dioptre d'entrée plan, une face de sortie (206) formant un dioptre de sortie convexe et un axe optique (208) traversant le dioptre d'entrée (204) et le dioptre de sortie (206),
ledit volume de matière comprenant :
- une lame (210) comprenant le dioptre d'entrée (204), ladite lame étant formée d'un matériau d'un indice de réfraction (n₃), et
- une pièce complémentaire (212) accolée à ladite lame et comprenant le dioptre de sortie (206), la pièce complémentaire comprenant un matériau d'indice (n₁) différent de différent de l'indice de réfraction (n₃) du matériau de la lame, de sorte que la lentille comprend un dioptre intermédiaire (214) entre la lame (210) et la pièce complémentaire (212);
**caractérisée en ce que** le dioptre de sortie (206) est configuré de manière à ce que le foyer optique (f) de la lentille soit situé sensiblement sur le dioptre d'entrée (204).

2. Lentille optique (202) selon la revendication 1, **caractérisée en ce que** le dioptre de sortie (206) est de profil généralement elliptique avec un premier et un deuxième foyer géométrique (F₁, F₂), le premier (F₁) desdits foyers étant situé à distance du dioptre d'entrée (204), le deuxième (F₂) desdits foyers géométriques étant situé dans la lentille.

3. Lentille optique (202) selon la revendication 2, **caractérisée en ce que** le premier (F₁) des foyers géométriques du profil elliptique du dioptre de sortie (206) est situé :
- soit à l'extérieur de la lentille, le dioptre d'entrée (204) étant entre le premier (F₁) des foyers géométriques et le deuxième (F₂) desdits foyers géométriques, lorsque l'indice de réfraction (n₃) de la lame (210) est inférieur à celui (n₁) de la pièce complémentaire (212) du volume de matière transparente,
- soit dans la lentille, lorsque l'indice de réfraction de la lame est supérieur à celui de la pièce complémentaire dudit volume.

4. Lentille optique (202) selon l'une des revendications 2 et 3, **caractérisée en ce que** les premier et deuxième foyers géométriques (F₁, F₂) du profil elliptique du dioptre de sortie (206) passent par l'axe optique (208).

5. Lentille optique (202) selon l'une des revendications 2 à 4, **caractérisée en ce que** le premier foyer géométrique (F₁) du profil elliptique est situé à une distance D=E(1-n₃/n₁) du dioptre d'entrée (204), E étant l'épaisseur de la lame, n₃ l'indice de réfraction de la lame et n₁ l'indice de réfraction de la pièce complémentaire (212) de la lentille.

6. Lentille optique (202) selon l'une des revendications 1 à 5, dans laquelle le dioptre intermédiaire (114) est plan.

7. Lentille optique(202) selon l'une des revendications 1 à 6, **caractérisée en ce que** la lentille présente une épaisseur moyenne ou maximale supérieure à 10 mm, préférentiellement 15 mm, plus préférentiellement 20 mm.

8. Lentille optique (202) selon l'une des revendications 1 à 7, **caractérisée en ce que** l'épaisseur D de la lame (210) est supérieure à 5 mm, préférentiellement 10 mm.

9. Lentille optique (202) selon l'une des revendications 1 à 8, **caractérisée en ce que** la lame (210) est maintenue en contact plan avec la pièce complémentaire (212) du volume de matière transparente par des moyens de mise en pression, préférentiellement en l'absence de matière supplémentaire au niveau du contact.

10. Lentille optique (202) selon l'une des revendications 1 à 9, **caractérisée en ce qu'**elle est configurée pour que des rayons passant par le foyer optique (f) et la traversant soient réfractés et sortent du dioptre de sortie (206) essentiellement parallèles à l'axe optique (208), de manière à former un faisceau d'éclairage.

11. Module d'éclairage notamment pour véhicule automobile, comprenant :
- une source lumineuse, notamment du type à électroluminescence ;
- une lentille disposée devant la source lumineuse de manière à former un faisceau d'éclairage ;
**caractérisé en ce que** la lentille (202) est conforme à l'une des revendications 1 à 10.

12. Ensemble de (226) de lentilles optiques notamment pour dispositif d'éclairage de véhicule automobile, **caractérisé en ce que** les lentilles sont conformes à l'une des revendications 1 à 10, la lame (216) étant commune à toutes les lentilles alors que la pièce complémentaire (218, 220, 222, 224) de chaque lentille est distincte des pièces complémentaires des autres lentilles.
